(19) Europäisches Patentamt
European Patent Office
Office européen des brevets

(11) EP 4 708 938 A1

(12) **EUROPEAN PATENT APPLICATION**
published in accordance with Art. 153(4) EPC

(43) Date of publication:
**11.03.2026 Bulletin 2026/11**

(21) Application number: 24797429.8

(22) Date of filing: **25.04.2024**

(51) International Patent Classification (IPC):
$H04W\ 8/00^{(2009.01)}$  $H04L\ 5/00^{(2006.01)}$
$H04W\ 48/16^{(2009.01)}$  $H04W\ 40/24^{(2009.01)}$
$H04W\ 76/14^{(2018.01)}$  $H04W\ 84/12^{(2009.01)}$
$H04W\ 76/20^{(2018.01)}$  $H04W\ 56/00^{(2009.01)}$

(52) Cooperative Patent Classification (CPC):
H04L 5/00; H04W 8/00; H04W 40/24; H04W 48/16;
H04W 56/00; H04W 76/14; H04W 76/20;
H04W 84/12

(86) International application number:
PCT/KR2024/005610

(87) International publication number:
WO 2024/225775 (31.10.2024 Gazette 2024/44)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.04.2023  KR 20230055778
14.11.2023  KR 20230157438

(71) Applicant: **Samsung Electronics Co., Ltd.**
**Suwon-si, Gyeonggi-do 16677 (KR)**

(72) Inventors:
• **CHOI, Junyoung**
**Suwon-si Gyeonggi-do 16677 (KR)**

• **KIM, Junsung**
**Suwon-si Gyeonggi-do 16677 (KR)**
• **SEO, Seungbeom**
**Suwon-si Gyeonggi-do 16677 (KR)**
• **OH, Hyunseob**
**Suwon-si Gyeonggi-do 16677 (KR)**
• **LEE, Soonho**
**Suwon-si Gyeonggi-do 16677 (KR)**
• **HAN, Sehee**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR PERFORMING WI-FI AWARE COMMUNICATION**

(57) A first station for performing Wi-Fi aware communication, according to one embodiment of the present disclosure, may receive at least one first beacon in a first access point (AP) period communicating with a first AP. Further, a wireless station may communicate with a second wireless station in a first aware period in which Wi-Fi aware communication is performed. According to one embodiment, the first AP period and the first aware period are determined by a maximum AP beacon interval (imax), and the maximum AP beacon interval (imax) may be determined by the larger of a first interval of the first beacon transmitted by the first AP and a second interval of a second beacon transmitted by a second AP connected with the second wireless station.

FIG. 4

EP 4 708 938 A1

## Description

[Technical Field]

The disclosure relates to a method for Wi-Fi Aware communication between electronic devices.

[Background Art]

In recent years, due to the development of wireless technology, wired networks that many people are using are being replaced by wireless networks. In other words, the mobility constraints of wired networks can be overcome by wireless technology, and as a result, various technologies utilizing wireless networks are being actively researched.

A Wireless Local Area Network (WLAN), also referred to as Wireless Fidelity (Wi-Fi), enables internet access within a certain range around an installed access point (AP) via mobile UEs or laptops. Particularly, with the popularization of mobile UEs, WLANs, which have potential as open wireless networks, are rapidly expanding, and Wi-Fi is being used to provide high-speed data services across entire urban areas, including schools, airports, hotels, and offices.

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation. Recently, a sensor network, a machine-to-machine (M2M) communication, machine type communication (MTC), and so forth have been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

Wi-Fi CERTIFIED Wi-Fi Aware™ (Wi-Fi Aware) refers to a technology that extends Wi-Fi capabilities by enabling rapid discovery, connection, and data exchange with other Wi-Fi devices without relying on traditional network infrastructure, internet connectivity, or GPS signals. Wi-Fi Aware may provide a function that allows devices to discover each other and establish direct connections without requiring other types of connections. Wi-Fi Aware may also be referred to as Neighbor Awareness Networking (NAN).

[Detailed Description of the Invention]

[Technical Problem]

The disclosure proposes a method of a wireless station that allocates time resources for an AP and Wi-Fi Aware by utilizing an AP beacon interval during Wi-Fi Aware communication.

[Technical Solution]

According to an embodiment of the disclosure, a first wireless station performing Wi-Fi Aware communication may receive at least one first beacon in a first access point (AP) period in which a first access point (AP) period in which the first wireless station communicates with a first AP. In addition, the wireless station may also communicate with a second wireless station in a first aware period in which the wireless station performs Wi-Fi Aware communication. According to an embodiment, the first AP period and the first aware period may be determined based on a maximum AP beacon interval ($i_{max}$), and the maximum AP beacon interval ($i_{max}$) may be determined by the greater of a first interval of the first beacon transmitted by the first AP and a second interval of a second beacon transmitted by a second AP connected to the second wireless station.

According to an embodiment of the disclosure, a method of a first wireless station performing Wi-Fi Aware communication may include receiving at least one first beacon in a first access point (AP) period in which the first wireless station communicates with a first AP. In addition, the wireless station may communicate with a second wireless station in a first aware period in which the wireless station performs Wi-Fi Aware communication. According to an embodiment, the first AP period and the first aware period may be determined based on a maximum AP beacon interval ($i_{max}$), and the maximum AP beacon interval ($i_{max}$) may be determined by the larger of a first interval of the first beacon transmitted by the first AP and a second interval of a second beacon transmitted by a second AP connected to the second wireless station..

[Advantageous Effects]

According to an embodiment of the disclosure, an electronic device may perform a method of allocating resources by utilizing an AP beacon period during Wi-Fi Aware communication, thereby improving communication efficiency.

[Brief Description of Drawings]

FIG. 1 illustrates a wireless communication system 100 including an access point and a wireless station.
FIG. 2A illustrates an operation of an access point and a wireless station for establishing Wi-Fi access.
FIG. 2B illustrates an operation between wireless stations for Wi-Fi Aware connection.
FIG. 3 illustrates allocation of time resources for AP communication and Wi-Fi Aware communication of a wireless station according to an embodiment of the disclosure.
FIG. 4 illustrates time resource allocation based on an AP beacon interval of a wireless station according to an embodiment of the disclosure.
FIG. 5 illustrates an example of an operation for recovery of a missed AP beacon of a wireless station according to an embodiment of the disclosure.
FIG. 6 illustrates an example of an operation of a wireless station when variation of AP traffic occurs, according to an embodiment of the disclosure.
FIG. 7 illustrates a flowchart of an operation for time resource allocation of a wireless station according to an embodiment of the disclosure.
FIG. 8 illustrates an operation method for time resource allocation of a wireless station according to an embodiment of the disclosure.
FIG. 9 illustrates a structure of a wireless station according to an embodiment of the disclosure.
FIGS. 10A and 10B illustrate adaptive neighbor awareness networking (NAN) scheduling in a multi-node environment.
FIG. 11 illustrates a method of transmitting scheduling information multiple times in a multi-node environment according to an embodiment of the disclosure.
FIGS. 12A and 12B illustrate a method of periodically and repeatedly transmitting scheduling information in a multi-node environment according to an embodiment of the disclosure.
FIG. 13 illustrates a method of transmitting scheduling information, based on a transmission time of previous scheduling information and packet delivery ratio (PDR) in a multi-node environment according to an embodiment of the disclosure.

[Mode for Carrying out the Invention]

Hereinafter, embodiments of the disclosure will be described in detail with reference to the accompanying drawings.
In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.
For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.
The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.
Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various example of the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. Furthermore, the terminal may include a machine to machine (M2M) terminal, and a machine type communication (MTC) terminal/device, but is not limited thereto. As used herein, the terminal may also be referred to as an electronic device or simply as a device.

Exemplary embodiments are described below in connection with Wireless Local Area Network (WLAN) systems merely for simplicity. It should be understood that the exemplary embodiments are equally applicable to other wireless networks (e.g., cellular networks, pico-networks, femto-networks, and satellite networks) as well as to systems using signals of one or more wired standards or protocols (e.g., Ethernet and/or HomePlug/PLC standards). As used herein, the terms "WLAN" and "Wi-Fi®" may encompass communications governed by the IEEE 802.11 family of standards, BLUETOOTH®, HiperLAN (a set of wireless standards primarily used in Europe and comparable to the IEEE 802.11 standards), and other technologies having relatively short wireless transmission ranges. Accordingly, the terms "WLAN" and "Wi-Fi" may be used interchangeably herein. In addition, although the following description is provided with respect to an infrastructure WLAN system including one or more access points (APs) and a plurality of wireless stations (STAs), it should be understood that the exemplary embodiments are equally applicable to other WLAN systems, such as multiple WLANs, peer-to-peer (or independent basic service set) systems, Wi-Fi Direct systems, and/or hotspots.

In addition, although the specification describes the exchange of data frames between wireless devices, exemplary embodiments may be applied to the exchange of any data units, packets, and/or frames between wireless devices. Accordingly, the term "frame" may include any frame, packet, or data unit, such as protocol data units (PDUs), media access control (MAC) protocol data units (MPDUs), and physical layer convergence procedure protocol data units (PPDUs). The term "A-MPDU" may refer to aggregated MPDUs.

In the following description, numerous specific details, such as examples of particular components, circuits, and processes, are set forth to provide a thorough understanding of the disclosure. As used herein, the term "connected" refers to being directly connected or connected through one or more intervening components or circuits. The term "associated access point" refers to an access point with which a given wireless station is currently associated and/or connected (e.g., where a communication channel or link is established between the access point and the given wireless station). In addition, in the following description and for purposes of explanation, specific nomenclature is set forth to provide a thorough understanding of the exemplary embodiments. However, it will be apparent to those skilled in the art that such specific details are not required to implement the exemplary embodiments. In other instances, well-known circuits and devices are shown in block diagram form in order not to obscure the disclosure.

Wi-Fi CERTIFIED Wi-Fi Aware™ (Wi-Fi Aware) refers to a technology that extends Wi-Fi capabilities by enabling rapid discovery, connection, and data exchange with other Wi-Fi devices without relying on traditional network infrastructure, internet connectivity, or GPS signals. Wi-Fi Aware may provide a function that allows devices to discover and directly connect to each other without other types of connections. Wi-Fi Aware may also be referred to as neighbor awareness networking (NAN).

Wi-Fi Aware networking may operate by forming a cluster with nearby devices or by creating a new cluster if the device is the first device in the area. An application may communicate with a Wi-Fi Aware system service that manages the Wi-Fi Aware hardware of the device by using a Wi-Fi Aware application programming interface (API). For example, a Wi-Fi Aware network connection may provide higher throughput over a longer range than a Bluetooth connection. For instance, a Wi-Fi Aware network connection may be useful for applications that share large amounts of data among users, such as photo sharing applications.

Bluetooth low energy (BLE) refers to a technology that operates with lower power consumption than conventional Bluetooth (or Bluetooth Classic) and may be used, for example, in electronic devices such as smart bands, watches, and beacons.

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

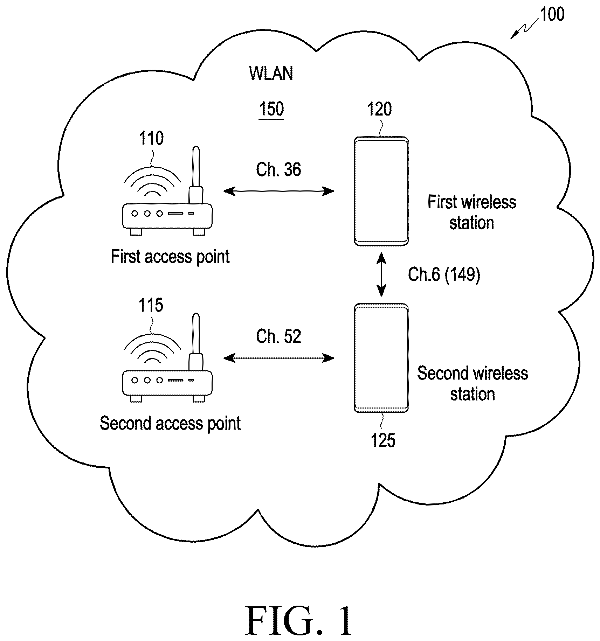

FIG. 1 illustrates a wireless communication system 100 including an access point and a wireless station.

Referring to FIG. 1, the wireless system 100 may include access points 110, 115, wireless stations 120, 125, and a wireless local area network (WLAN) 150.

The wireless communication system 100 may be configured by the one or more access points 110, 115 that provide a wireless communication channel or link to the one or more wireless stations (STAs) 120, 125.

The WLAN 150 may be configured by the plurality of Wi-Fi access points 110, 115 capable of operating according to the Institute of Electrical and Electronics Engineers (IEEE) 802.11 family of standards (or according to other suitable wireless protocols). Accordingly, although only two access points 110, 115 are illustrated in FIG. 1 for simplicity, the WLAN 150 may be configured by any number of access points such as the access point 110.

The access points 110, 115 are assigned unique media access control (MAC) addresses. Although in FIG. 1 the WLAN 150 is illustrated as an infrastructure basic service set (BSS), in other exemplary embodiments, the WLAN 150 may be an independent basic service set (IBSS) network or a peer-to-peer (P2P) network (e.g., operating according to Wi-Fi Direct protocols).

The wireless stations 120, 125 may be any suitable Wi-Fi capable wireless device or electronic device, including, for example, a cell phone, a personal digital assistant (PDA), a tablet device, a laptop computer, etc. The wireless stations 120, 125 may also be referred to by other suitable terminology, such as user equipment (UE), subscriber station, mobile unit, subscriber unit, wireless unit, remote unit, mobile device, wireless device, wireless communication device, remote device, mobile subscriber station, access UE, mobile UE, wireless UE, remote UE, handset, user agent, mobile client, client, electronic device, or any other appropriate term. In at least some embodiments, the wireless stations 120, 125 may include one or more transceivers, one or more processing resources (e.g., processors), one or more memory resources, and a power supply (e.g., a battery). The memory resources may include non-transitory computer-readable media storing instructions for performing operations described herein (e.g., one or more non-volatile memory elements such as EPROM, EEPROM, flash memory, hard drives, and the like).

The access points 110, 115 may be any suitable devices that enable one or more wireless devices to access a network (e.g., a local area network (LAN), a wide area network (WAN), a metropolitan area network (MAN), and/or the Internet) via the access points 110, 115 by using Wi-Fi, Bluetooth, or any other suitable wireless communication standard. In at least one embodiment, the access point 110 may include one or more transceivers, one or more processing resources (e.g., processors), one or more memory resources, and a power supply. The memory resources may include non-transitory computer-readable media storing instructions for performing operations described herein.

With respect to the access points 110, 115 and/or the wireless stations 120, 125, one or more transceivers may include Wi-Fi transceivers, Bluetooth transceivers, cellular transceivers, and/or other suitable radio frequency (RF) transceivers for transmitting and receiving wireless communication signals. Each transceiver may communicate with other wireless devices in distinct operating frequency bands and/or using distinct communication protocols. For example, a Wi-Fi transceiver may communicate within a 2.4 GHz frequency band and/or a 5 GHz frequency band according to IEEE 802.11 standard. A cellular transceiver may communicate within various RF frequency bands according to a 4G Long Term Evolution (LTE) protocol described by the 3rd Generation Partnership Project (3GPP) (e.g., from approximately 700 MHz to approximately 3.9 GHz), according to a 5G protocol, and/or according to other cellular protocols (e.g., a Global System for Mobile communications (GSM) protocol). In other embodiments, the transceivers may be any technically feasible transceivers, such as a ZigBee transceiver described by ZigBee specifications, a WiGig transceiver, and/or a HomePlug transceiver described by specifications from the HomePlug Alliance.

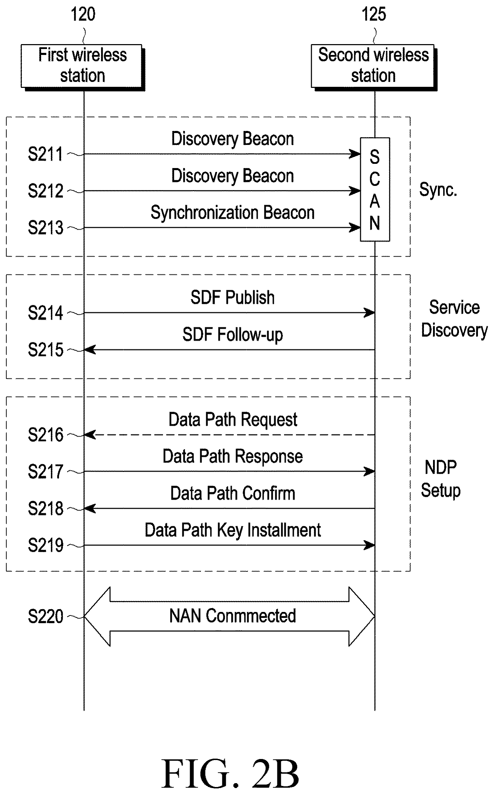

In addition, the first wireless station 120 and the second wireless station 125 may be connected by a Wi-Fi Aware networking method, in which the devices may discover each other and establish a direct connection without other types of connections. A procedure for Wi-Fi Aware (or NAN) connection will be described below with reference to FIG. 2B.

According to an embodiment, in the WLAN 100, while the access points 110, 115 and the associated wireless stations 120, 125 may communicate with each other, and while the wireless stations 120, 125 communicate with each other, different wireless channels may be used. The wireless channel refers to a frequency band connected to a wireless access point that serves as a path for transmitting wireless signals between a transmitter and a receiver. The wireless frequency is classified into 2.4 GHz and 5 GHz, where the 2.4 GHz band uses channels 1 to 14 and the 5 GHz band uses channels 7 to 196.

According to an embodiment, for example, as illustrated in FIG. 1, a first channel (e.g., channel 36 in the 5 GHz band) may be used for communication between the first access point 110 and the first wireless station 120, a second channel (e.g., channel 52 in the 5 GHz band) may be used for communication between the second access point 115 and the second wireless station 125, and a third channel (e.g., channel 14 in the 2.4 GHz band or channel 149 in the 5 GHz band) may be used for communication between the first wireless station 120 and the second wireless station 125.

In addition, in the disclosure, a channel used by the wireless stations 120, 125 for communication with the access points 110, 115 may be referred to as an AP channel, and a channel used for communication between the wireless stations may be referred to as an aware channel.

According to an embodiment, a period during which the first wireless station 120 communicates with the first access point 110 via an AP channel (e.g., channel 36) may be referred to as an AP period, and a period during which the first wireless station 120 communicates with the second wireless station 125 via an aware channel (e.g., channel 6) may be referred to as an aware period. In this case, in the AP period, the first wireless station 120 may receive an AP beacon from the first access point 110 via the AP channel, and subsequently, in the aware period, the first wireless station 120 may perform channel switching to the aware channel and transmit and may receive signals with the second wireless station 125.

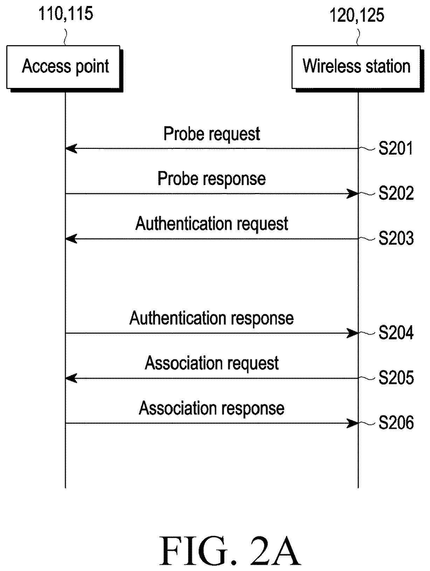

FIG. 2A illustrates operations of the access points 110, 115 and the wireless stations 120, 125 for establishing Wi-Fi access.

Referring to FIG. 2A, the wireless stations 120, 125 may transmit or broadcast probe requests to the access points 110, 115 (S201). For example, the probe request may indicate multiple communication capabilities supported by the wireless stations 120, 125.

When the access points 110, 115 receive the probe requests from the wireless stations 120, 125, the access points 110, 115 may respond by transmitting probe responses that mirror the information provided in the probe requests and intersecting the capabilities supported by the access points 110, 115 (S202).

Subsequently, upon receiving probe responses from the access points 110, 115, the wireless stations 120, 125 may transmit authentication requests to the access points 110, 115 (S203). For example, the authentication requests may trigger a lower-layer authentication mechanism as specified by the IEEE 802.11 standard.

The access points 110, 115 may then complete an authentication process by responding to the authentication requests with authentication responses transmitted to the wireless stations 120, 125 (S204).

When the authentication procedure is completed, the wireless stations 120, 125 may transmit association requests to the access points 110, 115 (S205). For example, the association requests may include one or more requested capabilities (e.g., according to the IEEE 802.11 standard) to be used for data communications between the wireless stations 120, 125 and the access points 110, 115.

When the access points 110, 115 are able to support the requested capabilities indicated in the association requests, the access points 110, 115 may generate an association ID (AID) for the wireless stations 120, 125 and transmit association responses back to the wireless stations 120, 125 (S206).

The access points 110, 115 may initiate a handshake operation to generate dynamic keys used to encrypt and decrypt data communications between the two devices. For example, the handshake operation may correspond to a four-way handshake as specified by the IEEE 802.11 standard, whereby the wireless station 120 and the access points 110, 115 exchange Extensible Authentication Protocol encapsulation (EAP) over Local Area Network (LAN) (EAPoL) frames via the local area network to generate actual encryption keys (e.g., Pairwise Transient Key (PTK)) for wireless link encryption and/or other encryption keys used for data encryption (and decryption). When the handshake is completed, the wireless stations 120, 125 are connected to the access points 110, 115. Each of the operations mentioned above is merely an example, is not an essential component, and some operations may be omitted.

FIG. 2B illustrates an operation of the first wireless station 120 and the second wireless station 125 for Wi-Fi Aware connection.

Referring to FIG. 2B, according to an embodiment, when the first wireless station 120 and the second wireless station 125 determine to proceed with a Wi-Fi Aware (or NAN) connection, the first wireless station 120 may transmit a discovery beacon message to the second wireless station 125 for synchronization (S211). The discovery beacon may include at least one of a frame control (FC) field indicating a function of the signal (e.g., a beacon), a broadcast address, a media access control (MAC) address of the electronic device transmitting at least one discovery beacon, a cluster identifier, a sequence control field, a time stamp for the beacon frame, a discovery beacon interval field indicating a transmission interval of at least one discovery beacon, and capability information of the electronic device transmitting at least one discovery beacon. According to an embodiment, at least one discovery beacon may include an information element related to at least one proximity network.

According to an embodiment, the first wireless station 120 may retransmit the discovery beacon message to the second wireless station 125 (S212).

According to an embodiment, the first wireless station 120 may transmit a synchronization beacon message to the second wireless station 125 (S213). At least one synchronization beacon may be a signal for maintaining synchronization (e.g., time clock synchronization) among electronic devices included in a cluster. The at least one synchronization beacon may include at least one piece of information associated with synchronization between electronic devices. For example, the at least one synchronization beacon may include at least one of a frame control (FC) field indicating a function of the signal (e.g., a beacon), a broadcast address, a media access control (MAC) address of the electronic device transmitting the at least one synchronization beacon, a cluster identifier, a sequence control field, a time stamp for the beacon frame, a beacon interval field indicating an interval between start points of synchronized communication periods, or capability information of the electronic device transmitting the at least one synchronization beacon. The at least one synchronization beacon may also include an information element related to at least one proximity network and, for example, may include service-related content that may be provided based on the proximity network. The operations S211 through S213 may be classified as a synchronization stage.

Subsequently, for service discovery, the first wireless station 120 may transmit a service discovery frame (SDF) publish message to the second wireless station 125 (S214), and the second wireless station 125 may transmit an SDF follow-up message to the first wireless station 120 (S215). The operations S211 through S213 may be classified as a service discovery stage.

The second wireless station 125 may transmit a data path request message to the first wireless station 120 for setting up a NAN data path (NDP) (S216), and the first wireless station 120 may transmit a data path response message to the second wireless station 125. The second wireless station 125 may transmit a data path confirm message to the first wireless station 120, and the first wireless station 120 may transmit a data path key installment message to the second wireless station 125 (S219). The first wireless station 120 and the second wireless station 125 may establish a NAN connection (S220).

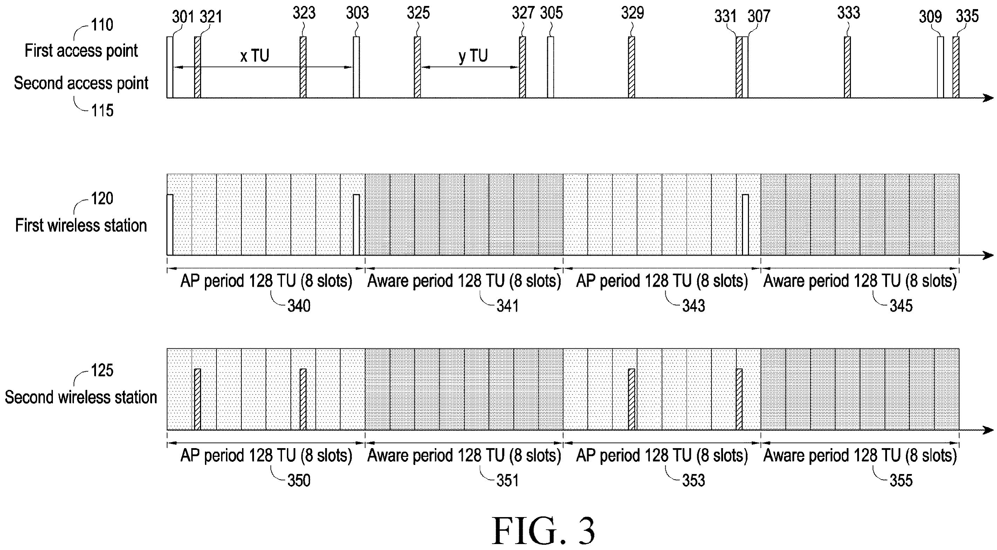

FIG. 3 illustrates allocation of time resources for AP communication and Wi-Fi Aware communication of a wireless station according to an embodiment of the disclosure.

As illustrated in FIG. 3, the first access point 110, the second access point 115, the first wireless station 120, and the second wireless station 125 are connected and associated as described with reference to FIGS. 1, 2A, and 2B.

Among the access points 110, 115, the first access point 110 may broadcast a plurality of beacons 301, 303, 305, 307, 309 via a first AP channel, and the second access point 115 may broadcast a plurality of beacons 321, 323, 325, 327, 329, 331, 333, 335 via a second AP channel. In the disclosure, the beacons broadcast by the access points may be referred to as AP beacons. All wireless devices located in the vicinity of the access points 110, 115 broadcasting beacons at a specific interval may collect the beacons broadcast by the APs through scanning.

The broadcasting of beacons by the access points 110, 115 is defined in the IEEE 802.11 standard. For example, when the access points 110, 115 transmit a beacon, the access points 110, 115 insert, into the beacon frame, not only identity information such as service set identifier (SSID) thereof and basic service set identifier (BSSID), but also frequency information and frequency type information responsible for transmitting and receiving data, and broadcast the beacon frame at a specific interval. The specific interval for broadcasting the beacon frame is indicated in an upper portion of the beacon frame as a beacon interval. The specific interval may slightly differ depending on manufacturers and may be freely set by a user.

The specific interval is generally preferred to be approximately 100 to 200 ms, and may be represented in units of 1 time unit (TU) (= 1,024 ms). FIG. 3 illustrates that the first access point 110 broadcasts beacons at an interval of xTU, and the second access point 115 broadcasts beacons at an interval of yTU.

According to an embodiment, the first wireless station 120 may transmit at least one discovery beacon to the second wireless station via an aware channel according to a NAN specification. Alternatively, the first wireless station 120 may transmit at least one synchronization beacon and/or at least one service discovery frame to the second wireless station within a discovery window (DW) occupying 16 time units (TUs) according to the NAN specification.

According to an embodiment, at least one service discovery frame may be a signal for advertising a service among one or more electronic devices within a cluster and for exchanging information related to the service, based on a proximity network. According to a NAN specification, the at least one service discovery frame may be a vendor specific public action frame and may include various fields. For example, the at least one service discovery frame may include an information element related to at least one proximity network.

According to an embodiment, a wireless station may configure one slot to 16 time units (TUs). The wireless station may allocate resources to an AP channel for Wi-Fi communication with an access point, and the resources allocated to the AP channel may be referred to as an AP period 340, 343, 350, 353. In addition, the wireless station may allocate resources to an aware channel for aware communication with another wireless station (STA), and the resources allocated to the aware channel may be referred to as an aware period 341, 345, 351, 355.

According to an embodiment, a wireless station may alternately and repeatedly allocate time resources of the same slot preconfigured in an AP period and the AP period, and this may be referred to as a legacy mode. For example, the wireless station may allocate 128 TUs (8 slots) of resources to the AP period and the aware period. The number of resources allocated to the AP channel and the aware channel may be identical or different.

According to an embodiment, as illustrated in FIG. 3, when the wireless stations 120, 125 allocate 128 TUs (8 slots) of resources to the AP channel and the Aware channel, channel switching may occur once during the 128 TUs. In addition, the wireless station may receive, in the AP period, a beacon from the AP via the AP channel, and may receive, in the aware period, a beacon or a service frame from another wireless station via the aware channel.

For example, in the AP periods 340, 343, the first wireless station 120 may receive beacons 301, 303, 307 broadcast by the first access point 110 via the first AP channel. However, in the aware periods 341, 345, since channel switching is performed to the aware channel, the first wireless station 120 may not receive beacons 305, 309 broadcast by the first access point 110.

Similarly, in the AP periods 350, 353, the second wireless station 125 may receive beacons 321, 323, 329, 331 broadcast by the second access point 115 via the second AP channel. However, in the aware periods 351, 355, since channel switching is performed to the aware channel, the second wireless station 125 may not receive beacons 325, 327, 333, 335 broadcast by the second access point 115.

According to an embodiment, as illustrated in FIG. 3, when the AP period and the aware period are each 128 TUs, and the periods for broadcasting AP beacons from the access points 110, 115 are x TU and y TU, respectively, and x and y are, for example, 120 and 70, the wireless station may receive one or two AP beacons during one AP period, and may miss one or two AP beacons during one aware period.

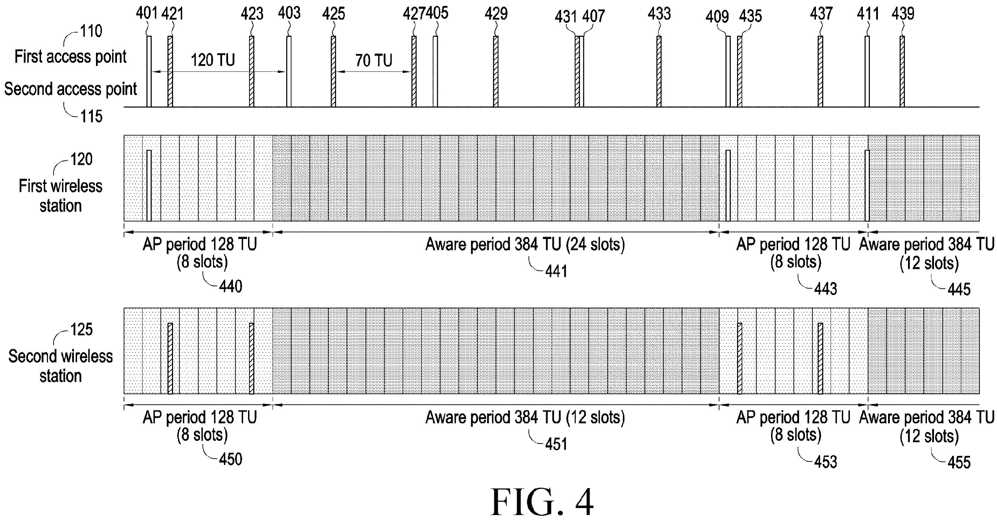

FIG. 4 illustrates time resource allocation based on an AP beacon interval of a wireless station according to an embodiment of the disclosure.

In FIG. 4, a resource allocation method including an extended aware period is proposed in order to improve the quality of service (QoS) between aware connections in a Wi-Fi Aware device. In addition, the disclosure proposes a time resource allocation method for AP communication and Wi-Fi Aware communication based on the AP beacon interval, so as to minimize connection loss due to AP beacon loss when AP communication and aware communication are alternately performed.

The first access point 110, the second access point 115, the first wireless station 120, and the second wireless station 125, illustrated in FIG. 4, are connected and associated as described with reference to FIGS. 1, 2A, and 2B.

The first access point 110 may broadcast a plurality of beacons 401-411 via a first AP channel (e.g., channel 36), and the second access point 115 may broadcast a plurality of beacons 421-439 via a second AP channel (e.g., channel 52).

According to an embodiment, in order to improve quality of service (QoS) by increasing throughput with another wireless station connected via Wi-Fi Aware, a wireless station may allocate more resources to an aware period than to an AP period. According to an embodiment, the wireless station may allocate resources to the AP period and the aware period, based on an AP beacon interval broadcast by the access point and an AP connection loss timeout. The AP connection loss timeout may refer to a beacon non-reception time configured for the wireless station to determine that the AP connection is lost.

According to an embodiment, an AP beacon interval broadcast by the first access point 110 may be defined as $i_1$, and an AP connection loss timeout may be defined as $t_1$. In addition, an AP beacon interval broadcast by the second access point 115 may be defined as $i_2$, and an AP connection loss timeout may be defined as $t_2$. FIG. 4 illustrates, for example, a case where $i_1 = 120$ TU, $i_2 = 70$ TU, $t_1 = 1,200$ TU, and $t_2 = 1,000$ TU.

According to an embodiment, a maximum AP beacon interval may be defined as $i_{max}$. The maximum AP beacon interval may refer to a greater value among $i_1$ and $i_2$. That is, $i_{max} = \max(i_1, i_2)$ may be determined. In addition, according to an embodiment, a minimum AP connection loss timeout may be defined as $t_{min}$. The minimum AP connection loss timeout may refer to a smaller value among $t_1$ and $t_2$. That is, $t_{min} = \min(t_1, t_2)$ may be determined. For example, when $i_1 = 120$ TU, $i_2 = 70$ TU, $t_1 = 1,200$ TU, and $t_2 = 1,000$ TU,

$i_{max} = \max(i_1, i_2) = 120$ TU and $t_{min} = \min(t_1, t_2) = 1,000$ TU.

According to an embodiment, the maximum number of consecutive non-received beacons configured to cause an AP connection loss may be defined as $\alpha$. The maximum number of consecutive non-received beacons configured to cause the AP connection loss may be determined based on the equation $\left\lceil \dfrac{t_{min}}{i_{max}} \right\rceil$. That is, it may be determined as

$$\alpha = \left\lceil \frac{t_{min}}{i_{max}} \right\rceil$$ . For example, as shown in FIG. 4, when $i_1$ = 120 TU, $i_2$ = 70 TU, $t_1$ = 1,200 TU, and $t_2$ = 1,000 TU, it may be

calculated as $$\alpha = \left\lceil \frac{1{,}000 \, TU}{120 \, TU} \right\rceil = 8$$ . This means that, in a communication network in which the access points 110, 115 and the wireless stations 120, 125 illustrated in FIG. 4 are connected and associated, the maximum number ($\alpha$) of consecutive non-received beacons configured to cause the AP connection loss may be calculated as eight.

According to an embodiment, the number of beacons during a discovery window (DW) interval may be defined as $\beta$. The DW interval refers to one period during which a wireless station receives beacons, and FIG. 4 illustrates that the case where the DW interval is configured to 512 TU. The number of beacons during the discovery window (DW) interval may be determined based on the equation $$\left\lceil \frac{DW_{interval}}{i_{max}} \right\rceil$$ . That is, it may be determined as $$\beta = \left\lceil \frac{DW_{interval}}{i_{max}} \right\rceil$$ . For

example, as shown in FIG. 4, when $i_1$ = 120 TU, $i_2$ = 70 TU, $t_1$ = 1,200 TU, and $t_2$ = 1,000 TU, and the DW interval is configured to 512 TU, it may be calculated as $$\alpha = \left\lceil \frac{512 \, TU}{120 \, TU} \right\rceil = 4$$ . This means that, in a communication network in which the access points 110, 115 and the wireless stations 120, 125 illustrated in FIG. 4 are connected and associated, the number ($\beta$) of beacons during the discovery window (DW) interval may be calculated as four.

According to an embodiment, the number of discovery window (DW) intervals during which an AP connection is maintained even when the wireless station skips reception of AP beacons may be defined as a margin (m). Since the wireless station is able to receive AP beacons only in an AP period within a DW interval, the margin (m) may be defined as the number of AP periods during which the AP connection is maintained even when the wireless station skips reception of AP beacons. The margin (m) may be calculated as $$\frac{\alpha}{\beta}$$ . For example, as shown in FIG. 4, when $i_1$ = 120 TU, $i_2$ = 70 TU, $t_1$ =

1,200 TU, $t_2$ = 1,000 TU, and the DW interval is 512 TU, it may be calculated as $$m = \frac{\alpha}{\beta} = \frac{8}{4} = 2$$ . This means that, in a communication network in which the access points 110, 115 and the wireless stations 120, 125 illustrated in FIG. 4 are connected and associated, the wireless station may maintain the AP connection even when AP beacons are not received during two AP periods, and the AP connection may be lost when AP beacons are not received during three AP periods.

According to an embodiment, the wireless station may allocate resources to an AP period and an aware period, based on the margin (m). When the margin (m) is less than or equal to one, the wireless station may determine that there is no discovery window (DW) interval in which reception of AP beacons is unnecessary, and may operate in a legacy mode in which the same time resources are allocated to the AP period and the aware period.

According to an embodiment, when the margin (m) is equal to or greater than one, the wireless station may maintain the AP connection without receiving AP beacon for [m] discovery window (DW) intervals, and when AP beacons are not received even in the ([m]+1)th DW interval, the wireless station may determine that the AP connection is lost and may allocate time resources including an extended aware period in consideration of the AP beacon interval. For example, as shown in FIG. 4, when $i_1$ = 120 TU, $i_2$ = 70 TU, $t_1$ = 1,200 TU, $t_2$ = 1,000 TU, and the DW interval is configured to 512 TU, in which case m is 2, the wireless station may perform a time resource allocation operation including the extended aware period in consideration of the AP beacon interval, as described below.

According to an embodiment, when the margin (m) is equal to or greater than 1, the wireless station may determine the AP period and the aware period as follows.

【Equation 1】

$$AP \ period = \left\lceil \frac{i_{max}}{t_{slot}} \right\rceil \ slot(s)$$

【Equation 2】

$$Aware \ period = n_{slot} - AP \ period = n_{slot} - \left\lceil \frac{i_{max}}{t_{slot}} \right\rceil \ slot(s)$$

The $t_{slot}$ refers to the slot duration, and in the disclosure, it may be configured to 16 TU. The $n_{slot}$ refers to the number of slots within a DW interval and, for example, when the DW interval is 512 TU, it may be calculated as

$$n_{slot} = \left\lceil \frac{DW_{interval}}{t_{slot}} \right\rceil = \left\lceil \frac{512\,TU}{16\,TU} \right\rceil = 32$$ .

For example, as shown in FIG. 4, when $i_1$ = 120 TU, $i_2$ = 70 TU, $t_1$ = 1,200 TU, and $t_2$ = 1,000 TU, and the DW interval is 512 TU, the AP period may be calculated as $\left\lceil \frac{i_{max}}{t_{slot}} \right\rceil = \left\lceil \frac{120\,TU}{16\,TU} \right\rceil = 8$ slots and the aware period may be calculated as $n_{slot} - AP\ period = n_{slot} - \left\lceil \frac{i_{max}}{t_{slot}} \right\rceil = 32 - \left\lceil \frac{120\,TU}{16\,TU} \right\rceil = 24$ slots.

FIG. 4 illustrates the time resources scheduled in the same manner as described above at the first wireless station 120 and the second wireless station 125. That is, the first wireless station 120 and the second wireless station 125 may identically allocate 128 TU (8 slots) of time resources to the AP periods 440, 443, 450, 453 and 384 TU (24 slots) of time resources to the aware periods 441, 445, 451, 455.

According to an embodiment, in the first AP period 440, the first wireless station 120 may receive a beacon 401 broadcast by the first access point 110. In the first aware period 441, the first wireless station 120 may perform Wi-Fi Aware communication with the second wireless station 125 and may fail to receive three beacons 403, 405, 407 broadcast by the first access point 110. In the second AP period 443, the first wireless station 120 may receive two beacons 409, 411 broadcast by the first access point 110.

According to an embodiment, in the first AP period 450, the second wireless station 125 may receive two beacons 421, 423 broadcast by the second access point 115. In the first aware period 451, the second wireless station 125 may perform Wi-Fi Aware communication with the first wireless station 120 and may fail to receive five beacons 425, 427, 429, 431, 433 broadcast by the second access point 115. In the second AP period 453, the second wireless station 125 may receive two beacons 435, 437 broadcast by the second access point 115. In the second aware period 455, the second wireless station 125 may perform Wi-Fi Aware communication with the first wireless station 120 and may fail to receive five beacons (439, ..., omitted hereinafter) broadcast by the second access point 115.

According to an embodiment, when the margin (m) is equal to or greater than 1, the AP connection is lost if an AP beacon is not received even in the ([m]+1)th DW interval. Accordingly, when the probability of not receiving all the AP beacons within the DW interval is assumed to be 0.1, the probability of the AP connection being lost may be calculated as $0.1^{[m]+1}$. For example, as shown in FIG. 4, when $i_1$ = 120 TU, $i_2$ = 70 TU, $t_1$ = 1,200 TU, $t_2$ = 1,000 TU, and the DW interval is configured to 512 TU, in which case m is 2, the probability that the first and second wireless stations experience an AP connection loss may be calculated as $0.1^3$ = 0.1%.

According to an embodiment, a wireless station may operate an extended aware period in consideration of an AP beacon interval only when a predetermined condition is satisfied. When the aware period is extended, the period during which AP beacons fail to be received is also extended, thereby increasing the probability of an AP connection loss. Accordingly, the wireless station may determine, based on a predetermined condition between Wi-Fi Aware devices, whether to operate the extended aware period.

According to an embodiment, while transmitting a service discovery frame (SDF) between wireless stations performing Wi-Fi Aware communication, the wireless stations may exchange information regarding communication with APs to which the respective wireless stations are connected. The exchanged information may include at least one of information on whether a low-power mode is required in communication with the AP, or whether a high quality of service (QoS) is required. The exchanged information may also include at least one of an AP beacon interval of the AP connected to each wireless station or timing synchronization function (TSF) information. In addition, the exchanged information may include information on an AP connection loss timeout (TU or ms) of the AP connected to each wireless station.

According to an embodiment, the wireless station may determine, by using the exchanged information, whether a predetermined condition for operating an extended aware period in consideration of an AP beacon interval is satisfied. For example, the wireless station may operate the extended aware period in consideration of an AP beacon interval only when a low-power mode is not required in communication with the AP, or when a high quality of service (QoS) is not required. For example, the wireless station may operate the extended aware period only when voice or video traffic is not transmitted in communication with the AP.

According to an embodiment, the wireless station may operate the extended aware period in consideration of an AP beacon interval only when an application for one-hop data transmission, in which one wireless station performing aware communication transmits data unidirectionally to the other wireless station (for example, a QuickShare application), is being executed.

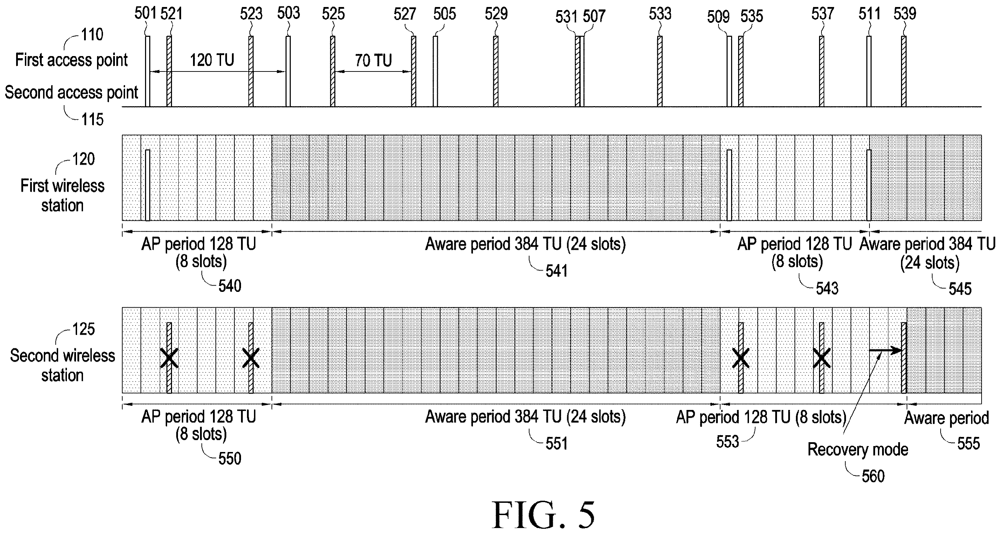

FIG. 5 illustrates an example of an operation for recovering a missed AP beacon of a wireless station according to an embodiment of the disclosure.

The first access point 110, the second access point 115, the first wireless station 120, and the second wireless station 125 illustrated in FIG. 5 are connected and associated as described with reference to FIGS. 1, 2A, and 2B.

As shown in FIG. 4, FIG. 5 illustrates that the first wireless station 120 and the second wireless station 125 perform time resource allocation to an aware period and an AP period in consideration of an AP beacon interval. That is, when the AP beacon interval broadcast by the first access point 110 is defined as $i_1$, the AP connection loss timeout is defined as $t_1$, the AP beacon interval broadcast by the second access point 115 is defined as $i_2$, and the AP connection loss timeout is defined as $t_2$, FIG. 5 illustrates a case where, for example, $i_1$ = 120 TU, $i_2$ = 70 TU, $t_1$ = 1,200 TU, and $t_2$ = 1,000 TU.

Referring to FIG. 5, as in FIG. 4, the first wireless station 120 and the second wireless station 125 may identically allocate 128 TU (8 slots) of time resources to first AP periods 540, 550, and may identically allocate 384 TU (24 slots) of time resources to second aware periods 541, 551.

According to an embodiment, in the first AP period 540, the first wireless station 120 may receive a beacon 501 broadcast by the first access point 110. In the first aware period 541, the first wireless station 120 may perform Wi-Fi Aware communication with the second wireless station 125 and may fail to receive three beacons 403, 405, 407 broadcast by the first access point 110. In the second AP period 443, the first wireless station 120 may receive two beacons 409, 411 broadcast by the first access point 110.

According to an embodiment, in the first AP period 550, the second wireless station 125 may fail to receive both beacons 521, 523 broadcast by the second access point 115. In the first aware period 551, the second wireless station 125 may perform Wi-Fi Aware communication with the first wireless station 120 and may fail to receive five beacons 425, 427, 429, 431, 433 broadcast by the second access point 115.

Thereafter, when the second wireless station 125 fails to receive, in the second AP period 553, both beacons 435, 437 broadcast by the second access point 115, all AP beacons fail to be received for two AP periods, which corresponds to the margin (m), i.e., the number of AP periods during which an AP connection is maintained even when AP beacons are received (skipped). Accordingly, the AP connection may be lost. In this case, the second wireless station 125 may switch to recovery mode 560 and may extend the second AP period until receiving the next beacon 439 after the last beacon 437 that failed to be received.

According to an embodiment, the probability that the wireless station switches to recovery mode may be calculated as follows. As described above, when the AP beacon interval broadcast by the first access point 110 is defined as $i_1$, the AP connection loss timeout is defined as $t_1$, the AP beacon interval broadcast by the second access point 115 is defined as $i_2$, and the AP connection loss timeout is defined as $t_2$, it is assumed, for example, that $i_1$ = 120 TU, $i_2$ = 70 TU, $t_1$ = 1,200 TU, and $t_2$ = 1,000 TU. In this case, the margin (m), which is the number of AP periods during which the AP connection is maintained even when AP beacons are not received (skipped), may be calculated as 2.

According to an embodiment, the number of AP beacons that the first wireless station 120 may receive within the AP connection loss timeout ($t_1$) of 1,200 TU is three, and the AP connection loss timeout ($t_1$) is greater than DW interval (512 TU) * m (2) + 1*AP1 beacon interval ($i_1$) (120 TU). Accordingly, the probability that the first wireless station 120 switches to recovery mode due to failing to receive all AP beacons during the AP connection loss timeout ($t_1$) may be calculated as $0.1^3$.

According to an embodiment, the number of AP beacons that the second wireless station 125 may receive within the AP connection loss timeout ($t_2$) of 1,000 TU is three to four, and the AP connection loss timeout ($t_2$) is less than DW interval (512 TU) * m (2). Accordingly, the probability that the second wireless station 125 switches to recovery mode due to failing to receive all AP beacons during the AP connection loss timeout ($t_2$) may be calculated as $0.1^3$.

According to an embodiment, when the minimum AP connection loss timeout ($t_{min}$) is 3,000 TU, the probability that the wireless station switches to recovery mode due to failing to receive AP beacons may be calculated as $0.1^9$.

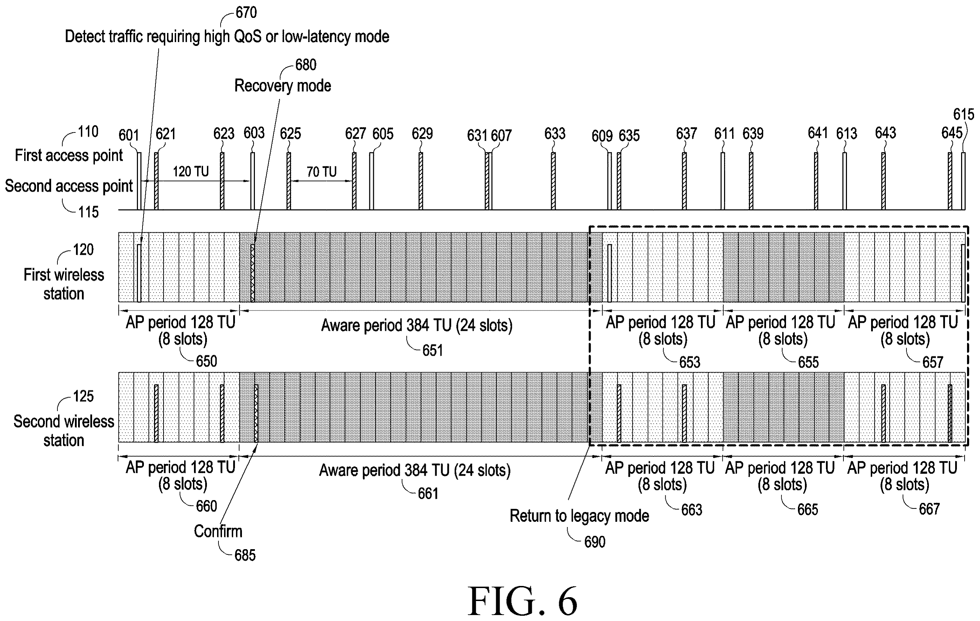

FIG. 6 illustrates an example of an operation of a wireless station when variation of AP traffic occurs, according to an embodiment of the disclosure.

The first access point 110, the second access point 115, the first wireless station 120, and the second wireless station 125 illustrated in FIG. 6 are connected and associated as described with reference to FIGS. 1, 2A, and 2B.

As shown in FIG. 4, FIG. 6 illustrates that the first wireless station 120 and the second wireless station 125 perform time resource allocation to an aware period and an AP period in consideration of an AP beacon interval. That is, when the AP beacon interval broadcast by the first access point 110 is defined as $i_1$, the AP connection loss timeout is defined as $t_1$, the AP beacon interval broadcast by the second access point 115 is defined as $i_2$, and the AP connection loss timeout is defined as $t_2$, FIG. 6 illustrates a case where, for example, $i_1$ = 120 TU, $i_2$ = 70 TU, $t_1$ = 1,200 TU, and $t_2$ = 1,000 TU.

Referring to FIG. 6, as in FIG. 4, the first wireless station 120 and the second wireless station 125 may identically allocate 128 TU (8 slots) of time resources to first AP periods 540, 550, and may identically allocate 384 TU (24 slots) of time resources to second aware periods 541, 551.

According to an embodiment, in the first AP period 650, the first wireless station 120 may receive a beacon 601 broadcast by the first access point 110. In the first aware period 651, the first wireless station 120 may perform Wi-Fi Aware communication with the second wireless station 125 and may fail to receive three beacons 603, 605, 607 broadcast by the first access point 110.

According to an embodiment, in the first AP period 450, the second wireless station 125 may receive two beacons 421, 423 broadcast by the second access point 115. In the first aware period 451, the second wireless station 125 may perform Wi-Fi Aware communication with the first wireless station 120 and may fail to receive five beacons 425, 427, 429, 431, 433 broadcast by the second access point 115.

According to an embodiment, when, in the first AP period 650, the first wireless station 120 detects traffic requiring high QoS for AP connection or traffic requiring a low-latency mode (670), the first wireless station 120 may transmit, in the second aware period 653, an action frame (680) indicating recovery mode to the second wireless station 125 via an aware channel for performing Wi-Fi Aware communication. The second wireless station 125, upon receiving the action frame, may transmit an action frame 685 indicating confirmation to the first wireless station 120 via the aware channel for performing Wi-Fi Aware communication. Thereafter, the first wireless station 120 and the second wireless station 125 may switch to a legacy mode (690) in which the same time resources are allocated to the AP period and the aware period from the second AP periods 653, 663 following the first aware periods 651, 661. In this case, the delay time until the wireless station switches to the legacy mode after detecting an AP traffic change may be expected to correspond to the DW interval, i.e., 512 TU.

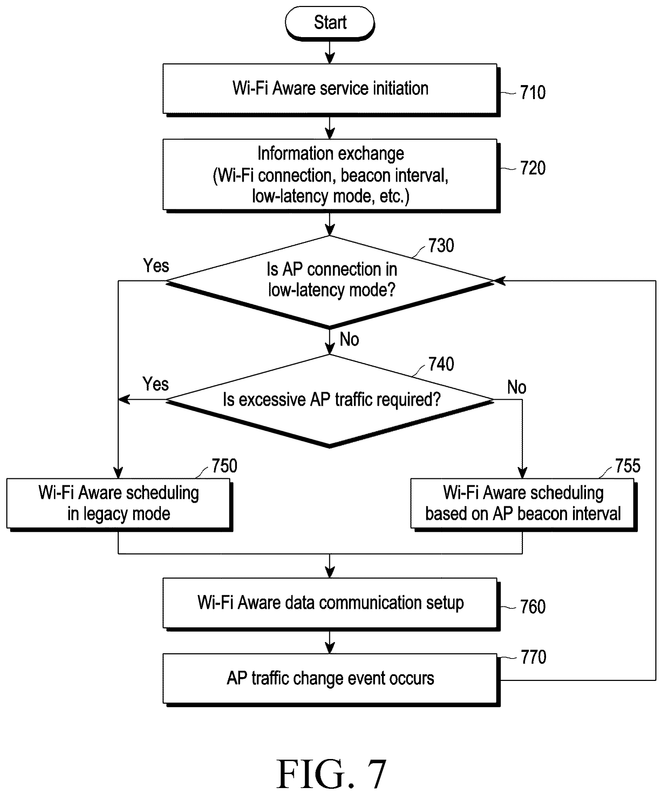

FIG. 7 illustrates a flowchart of an operation for time resource allocation of a wireless station according to an embodiment of the disclosure.

The wireless station of FIG. 7 may include the first wireless station 120 that is connected to the first access point 110 and the second access point 115 to perform AP communication as described with reference to FIGS. 1, 2A, and 2B, and that performs Wi-Fi Aware communication with the second wireless station 125.

According to an embodiment, the first wireless station 120 may initiate a Wi-Fi Aware service with the second wireless station 125 (710). The Wi-Fi Aware service may include, for example, a QuickShare application service.

According to an embodiment, the first wireless station 120 may exchange information with the second wireless station 125 (720). The exchanged information may include at least one of information for Wi-Fi connection, an AP beacon interval, whether a low-latency mode is required, and whether excessive traffic is required.

According to an embodiment, the first wireless station 120 may determine whether the AP connection with the first access point 110 is in a low-latency mode and, based on the exchanged information, whether the AP connection between the second wireless station 125 and the second access point 115 is in a low-latency mode (730). When at least one of the AP connection with the first access point 110 or the AP connection between the second wireless station 125 and the second access point 115 requires a low-latency mode, the wireless station may perform Wi-Fi Aware scheduling in a legacy mode (750). According to an embodiment, when neither the AP connection with the first access point 110 nor the AP connection between the second wireless station 125 and the second access point 115 requires a low-latency mode, the first wireless station 120 may determine whether at least one of the AP connection with the first access point 110 and, based on the exchanged information, the AP connection between the second wireless station 125 and the second access point 115 requires excessive traffic (740).

According to an embodiment, when at least one of the AP connection between the first wireless station 120 and the first access point 110 and the AP connection between the second wireless station 125 and the second access point 115 requires excessive AP traffic, the first wireless station 120 may perform Wi-Fi Aware scheduling in a legacy mode (750).

According to an embodiment, when neither the AP connection between the first wireless station 120 and the first access point 110 nor the AP connection between the second wireless station 125 and the second access point 115 requires excessive AP traffic, the first wireless station 120 may perform Wi-Fi Aware scheduling based on an AP beacon interval (755). Thereafter, the first wireless station 120 may set up Wi-Fi Aware data communication according to the scheduling (760). According to an embodiment, the first wireless station 120 may detect that an AP traffic change event has occurred (770). Thereafter, the wireless station may return to operation 730, and the first wireless station 120 may determine whether the AP connection with the first access point 110 is in a low-latency mode and, based on the exchanged information, whether the AP connection between the second wireless station 125 and the second access point 115 is in a low-latency mode.

In the disclosure, in time resource allocation including an extended aware period, based on an AP beacon interval, when the DW interval is 512 TU, a method of guaranteeing reception of at least one AP beacon is proposed. This may be a method in which the probability of an AP connection loss is very low.

According to an embodiment, the wireless station may perform time resource allocation as shown in [Equation 3] below. This is based on [Equation 1] and [Equation 2] disclosed in FIG. 4.

【Equation 3】

$$AP\ period : Aware\ period = \left\lceil \frac{i_{max}}{t_{slot}} \right\rceil : n_{slot} - AP\ period = \left\lceil \frac{i_{max}}{16\ TU} \right\rceil : 32 - \left\lceil \frac{i_{max}}{t_{slot}} \right\rceil$$

In [Equation 3], when 120 TU, which is an AP beacon interval typically used in an access point, is configured as a maximum AP beacon interval ($i_{max}$), it may be determined as

$$AP\ period = \left\lceil \frac{120\ TU}{16\ TU} \right\rceil = 8 \text{ slots,} \quad Aware\ period = 32 - \left\lceil \frac{120\ TU}{16\ TU} \right\rceil = 24 \text{ slots} .$$

According to an embodiment, when an AP traffic change event occurs, a low-latency mode is required, and the wireless station may perform adaptive time resource allocation for an AP period and an aware period, based on the average throughput. When data processing starts from $t_0$, the average throughput during a period from $t_1$ to $t_2$ may be calculated as $[\text{TxByte}_{(t2-t0)}\text{-prevTxByte}_{(t1-t0)}\text{+RxByte}_{(t2-t0)}\text{-prevRxByte}_{(t1-t0)}] / _{(t2-t1)}$.

Accordingly, when the DW interval is 512 TU, the wireless station may perform static scheduling of the AP period and the aware period into 8 slots and 24 slots, respectively, as a method of guaranteeing reception of at least one AP beacon, to reduce the probability of an AP connection loss. According to an embodiment, when there is no additional change in the beacon interval and no TSF information exchange, the wireless station may apply the static scheduling. In addition, according to an embodiment, when a low-power mode is detected in AP traffic, the wireless station may use a resource allocation method of a legacy mode for QoS, in which the same time resources are allocated to the AP period and the aware period.

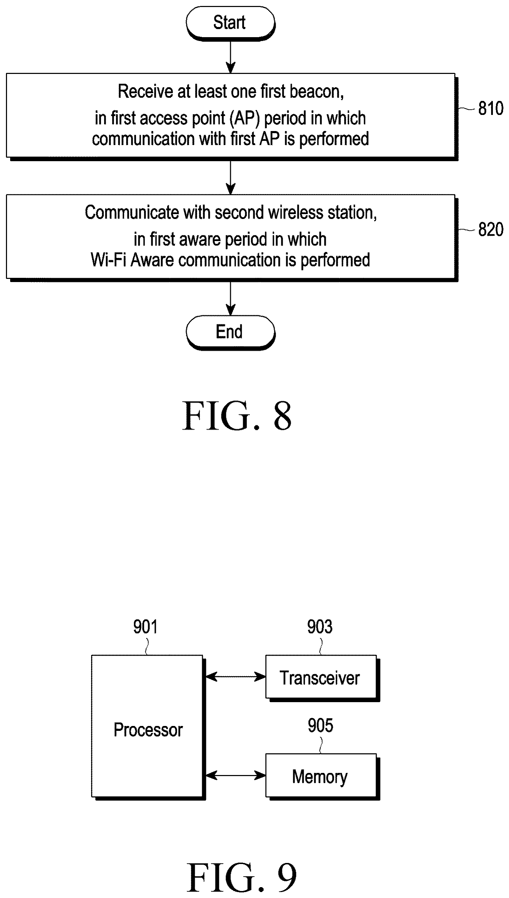

FIG. 8 illustrates an operation method for time resource allocation of a wireless station according to an embodiment of the disclosure.

The wireless station of FIG. 8 may be implemented as the wireless station or a Wi-Fi Aware electronic device illustrated in FIGS. 1 to 8.

According to an embodiment, the wireless station may receive at least one first beacon in a first access point (AP) period in which the wireless station communicates with a first AP (810). In addition, the wireless station may communicate with a second wireless station in a first aware period in which the wireless station performs Wi-Fi Aware communication (820). According to an embodiment, the first AP period and the first aware period may be determined by a maximum AP beacon interval ($i_{max}$), and the maximum AP beacon interval ($i_{max}$) may be determined by the larger of a first interval of the first beacon transmitted by the first AP and a second interval of a second beacon transmitted by a second AP connected to the second wireless station.

According to an embodiment, when determining the first AP period and the first aware period, the wireless station may be configured to determine the first AP period and the first aware period, based on a minimum AP connection loss timeout ($t_{min}$), and the minimum AP connection loss timeout ($t_{min}$) may be determined by the smaller of a first beacon non-reception time configured to cause an AP connection between the first wireless station and the first AP to be lost and a second beacon non-reception time configured to cause an AP connection between the second wireless station and the second AP to be lost.

According to an embodiment, when the maximum number ($\alpha$) of consecutive non-received beacons configured to cause an AP connection loss is greater than or equal to the number ($\beta$) of beacons in a discovery window (DW) interval, the first AP period may be determined by the number of slots based on the maximum AP beacon interval ($i_{max}$), and the first aware period may be determined by the number of slots based on the discovery window (DW) interval and the first AP period. In addition, the maximum number ($\alpha$) of consecutive non-received beacons configured to cause an AP connection loss may be determined by the maximum AP beacon interval ($i_{max}$) and the minimum AP connection loss timeout ($t_{min}$), and the number ($\beta$) of beacons in the DW interval may be determined by the maximum AP beacon interval ($i_{max}$) and the DW interval.

According to an embodiment, when the maximum number ($\alpha$) of consecutive non-received beacons configured to cause an AP connection loss is less than the number ($\beta$) of beacons in the DW interval, the first aware period and the first AP period may have the same predetermined length.

According to an embodiment, when a low-latency mode is required in at least one of connections between the first AP and the first station and between the second AP and the second wireless station, the first aware period and the first AP period may have the same predetermined length.

According to an embodiment, when traffic greater than or equal to a preconfigured value is required in at least one of connections between the first AP and the first station and between the second AP and the second wireless station, the first aware period and the first AP period may have the same predetermined length.

According to an embodiment, when it is detected that a low-latency mode is required in a connection between the first AP and the first station in the first AP period, or that traffic greater than or equal to a preconfigured value is required, the wireless station may transmit, in the first aware period, a first action frame indicating recovery mode to the second wireless station.

According to an embodiment, when a low-latency mode is required in the connection between the first AP and the first station in the first AP period, or when traffic greater than or equal to a preconfigured value is required, the wireless station may receive, in response to the first action frame, a second action frame indicating confirmation from the second wireless station.

According to an embodiment, the wireless station may receive a beacon from the first AP in a second AP period following the first aware period, and may communicate with the second wireless station in a second aware period following the second AP period. In addition, the second AP period and the second aware period may have the same predetermined length.

According to an embodiment, when the wireless station fails to receive all beacons from the first AP until the second AP period corresponding to the margin (m) value following the first aware period, the second AP period may be extended beyond the first AP period until the next beacon is received, and the margin (m) value may be determined based on the maximum number ($\alpha$) of consecutive beacon losses configured to cause the AP connection loss and the number ($\beta$) of beacons during a DW interval.

FIG. 9 illustrates a structure of a wireless station according to an embodiment of the disclosure.

The wireless station in FIG. 9 may be implemented as the wireless station or Wi-Fi Aware device illustrated in FIG. 1 to FIG. 8.

Referring to FIG. 9, the wireless station may include a processor 901, a transceiver 903, and memory 905.

The processor 901 may control the overall operation of the wireless station according to the embodiments proposed in the disclosure. For example, the processor 901 may control signal flows between the respective blocks to perform operations according to the above-described flowcharts. Specifically, the processor 901 may control, for example, the operation of the wireless station illustrated in FIG. 1 to FIG. 8. The transceiver 903 may transmit/receive signals with an external electronic device.

The memory 905 may store at least one of information transmitted/received through the transceiver 903 and information generated through the processor 901.

An electronic device according to an embodiment of the disclosure includes a transceiver 903 and a processor 901. The processor 901 may be configured to receive at least one first beacon in a first access point (AP) period in which communication with a first AP is performed, and communicate with a second wireless station in a first aware period in which Wi-Fi Aware communication is performed. According to an embodiment, the first AP period and the first aware period may be determined based on a maximum AP beacon interval ($i_{max}$), and the maximum AP beacon interval ($i_{max}$) may be determined by the larger of a first interval of the first beacon transmitted by the first AP and a second interval of a second beacon transmitted by a second AP connected to the second wireless station.

According to an embodiment, the processor 901 may be configured, when the first AP period and the first aware period are determined, to determine the first AP period and the first aware period, based on a minimum AP connection loss timeout ($t_{min}$), and the minimum AP connection loss timeout ($t_{min}$) may be determined by the smaller of a first beacon non-reception time configured to cause an AP connection between the first wireless station and the first AP to be lost, and a second beacon non-reception time configured to cause an AP connection between the second wireless station and the second AP to be lost.

According to an embodiment, when the maximum number ($\alpha$) of consecutive non-received beacons configured to cause an AP connection to be lost is equal to or greater than the number ($\beta$) of beacons during a discovery window (DW) interval, the first AP period is determined by the number of slots based on the maximum AP beacon interval ($i_{max}$), the first aware period is determined by the first AP period and the number of slots based on the DW interval. In addition, the maximum number ($\alpha$) of consecutive non-received beacons configured to cause the AP connection to be lost may be determined by the maximum AP beacon interval ($i_{max}$) and the minimum AP connection loss timeout ($t_{min}$), and the number ($\beta$) of beacons during the DW interval may be determined by the maximum AP beacon interval ($i_{max}$) and the DW interval.

According to an embodiment, when the maximum number ($\alpha$) of consecutive non-received beacons configured to cause the AP connection to be lost is less than the number ($\beta$) of beacons during the DW interval, the first aware period and the first AP period may have an identical predetermined length.

According to an embodiment, when at least one of connections between the first AP and the first station and between the second AP and the second wireless station requires a low-latency mode, the first aware period and the first AP period may have an identical predetermined length.

According to an embodiment, when at least one of connections between the first AP and the first station and between the second AP and the second wireless station requires traffic equal to or greater than a preconfigured value, the first aware period and the first AP period may have an identical predetermined length.

According to an embodiment, the processor 901 may be configured, when it is detected in the first AP period that a low-latency mode is required in a connection between the first AP and the first wireless station or that traffic equal to or greater than a preconfigured value is required, to transmit, in the first aware period, a first action frame indicating recovery mode to the second wireless station.

According to an embodiment, the processor 901 may be configured, when it is detected in the first AP period that a low-latency mode is required in a connection between the first AP and the first wireless station or that traffic equal to or greater than a preconfigured value is required, to receive, in response to the first action frame, a second action frame indicating confirm from the second wireless station.

According to an embodiment, the processor 901 may be configured to receive a beacon from the first AP in a second AP period following the first aware period, and communicate with the second wireless station in a second aware period following the second AP period. In addition, the second AP period and the second aware period may have an identical predetermined length.

According to an embodiment, when, after the first aware period, beacons from the first AP are not completely received until the second AP period corresponding to a margin (m) value, the second AP period may be extended beyond the first AP period until the next beacon is received, and the margin (m) value may be determined based on the maximum number (α) of consecutive non-received beacons configured to cause the AP connection to be lost and the number (β) of beacons during the DW interval.

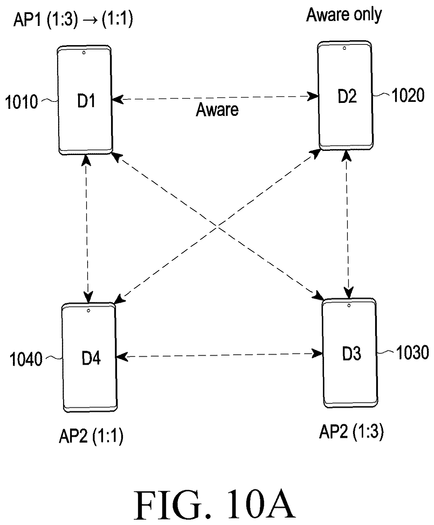

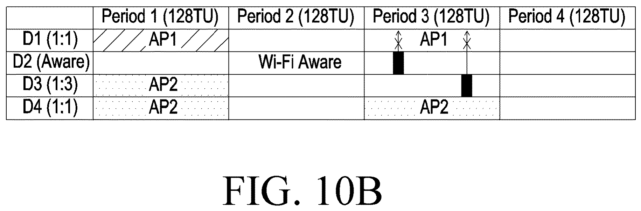

FIGS. 10A and 10B illustrate adaptive neighbor awareness networking (NAN) scheduling in a multi-node environment.

FIG. 10A illustrates that a first electronic device (D1) 1010, a second electronic device (D2) 1020, a third electronic device (D3) 1030, and a fourth electronic device (D4) 1040 perform Wi-Fi Aware communication as in the wireless stations described in FIGS. 1, 2A, and 2B.

Referring to FIG. 10A, the first electronic device (D1) 1010, the third electronic device (D3) 1030, and the fourth electronic device (D4) 1040 may communicate with access points as in the first wireless station 120 and the second wireless station 125 illustrated in FIG. 1. More specifically, the first electronic device (D1) 1010 may communicate with the first AP, and the third electronic device (D3) 1030 and the fourth electronic device (D4) 1040 may communicate with the second AP.

In addition, the first electronic device (D1) 1010, the third electronic device (D3) 1030, and the fourth electronic device (D4) 1040 may perform resource allocation including an extended aware period to improve quality of service (QoS) between aware connections in Wi-Fi Aware devices, as illustrated in FIG. 4. Accordingly, as AP communication and aware communication are alternately performed, an adaptive time resource allocation method for an AP communication period and a Wi-Fi Aware communication period based on an AP beacon interval may be applied to minimize connection loss due to AP beacon loss. For example, the first electronic device (D1) 1010, the second electronic device (D2) 1020, the third electronic device (D3) 1030, and the fourth electronic device (D4) 1040 may operate one slot as 16 TU and may operate one period as 8 slots = 128 TU.

Accordingly, FIGS. 10A and 10B illustrate a case where the first electronic device (D1) 1010 and the fourth electronic device (D4) 1040 operate an AP communication period and a Wi-Fi Aware communication period in a 1:1 ratio, the third electronic device (D3) 1030 operates an AP communication period and a Wi-Fi Aware communication period in a 1:3 ratio, and the first electronic device (D1) 1010 changes the AP communication period and the Wi-Fi Aware communication period to a 1:1 ratio.

Referring to FIG. 10B, when the second electronic device (D2) 1020 and the third electronic device (D3) 1030 fail to receive and thus miss a message including scheduling update information of the first electronic device (D1) 1010, the first electronic device (D1) 1010 may recognize Period 3 as an aware period and transmit Wi-Fi Aware data, which may result in the first electronic device (D1) 1010 missing data. Such data miss may occur until the next scheduling update by an action frame. Accordingly, the disclosure may propose a method of updating scheduling information of an electronic device performing Wi-Fi Aware communication.

As described above, when Wi-Fi Aware communication is performed in a multi-node environment, each electronic device may store a device status table including aware scheduling for a neighbor device, and may use a predefined aware scheduling index (e.g., defined in advanced scheduling control (AScC)). For example, a device status table stored by the third electronic device (D3) 1030 for the first electronic device (D1) 1010, the second electronic device (D2) 1020, and the fourth electronic device (D4) 1040 is shown in Table 1 below.

[Table 1]

| Device ID | Index | Time (ms) | PDR |
|---|---|---|---|
| D1 | 1 (ANS) | 102,628 | 0.57 |
| D2 | 2 (Aware) | 98,020 | 0.91 |
| D4 | 0 (Legacy) | 103,140 | 0.88 |

In an embodiment, the device status table may include information as follows.

(1) Device ID (identifier): a neighbor awareness networking (NAN) ID or a media access control (MAC) address
(2) Scheduling index: 0 (legacy), 1 (adaptive NAN scheduling (ANS)), 2 (aware only)
(3) Last update time of device information (elapsed time since the last update)
(4) Packet delivery ratio (PDR): number of delivered packets / number of transmitted packets (i.e., number of packets for which an ACK is received / number of transmitted packets)
(5) Others

The scheduling index may include a predefined aware scheduling index. The scheduling index may indicate how the electronic device operates an AP communication period and an aware communication period. In an embodiment, when the scheduling index is 0 (legacy), the scheduling index may indicate that the electronic device operates the AP communication period and the aware communication period in a 1:1 ratio. In an embodiment, when the scheduling index is 1 (adaptive NAN scheduling (ANS)), the scheduling index may indicate that the electronic device adaptively operates the AP communication period and the aware communication period. For example, when the scheduling index is 1 (ANS), the scheduling index may indicate that the electronic device operates the AP communication period and the aware communication period in a 1:3 ratio, but is not limited thereto. In an embodiment, when the scheduling index is 2 (aware only), the scheduling index may indicate that only the aware communication period is operated.

A method of updating scheduling information of an electronic device performing Wi-Fi Aware communication proposed in the disclosure is as follows.

First embodiment: n-burst action frame transmission including scheduling information
Second embodiment: periodically transmitting scheduling information to neighbor devices
Third embodiment: requesting scheduling information according to the device status table

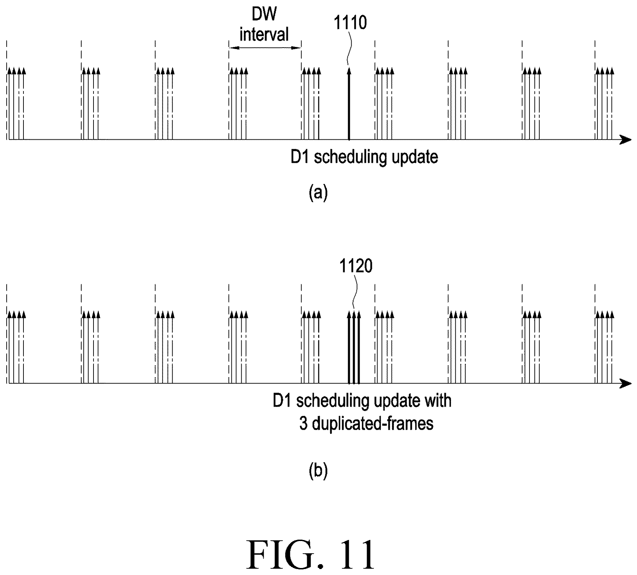

FIG. 11 illustrates a method of transmitting scheduling information multiple times in a multi-node environment according to an embodiment of the disclosure.

FIG. 11 relates to the first embodiment, and illustrates a case in which the first electronic device (D1) 1010 of FIG. 10 operates an AP communication period and a Wi-Fi Aware communication period in a 1:1 ratio, and then changes the AP communication period and the Wi-Fi Aware communication period to a 1:1 ratio.

In FIG. 11(a), the first electronic device (D1) 1010 may transmit one action frame 1110 including updated scheduling information during a DW interval after changing scheduling. In contrast, in FIG. 11(b), the first electronic device (D1) 1010 may transmit an action frame including updated scheduling information multiple times, for example, by replicating the action frame three times 1120.

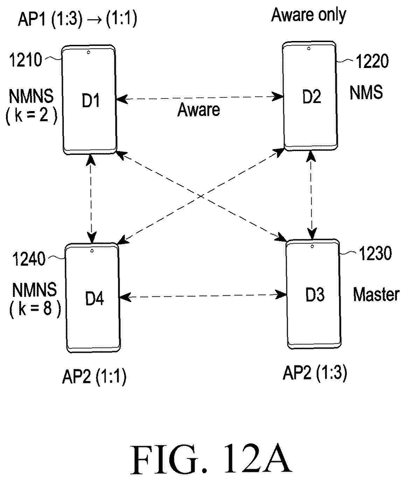

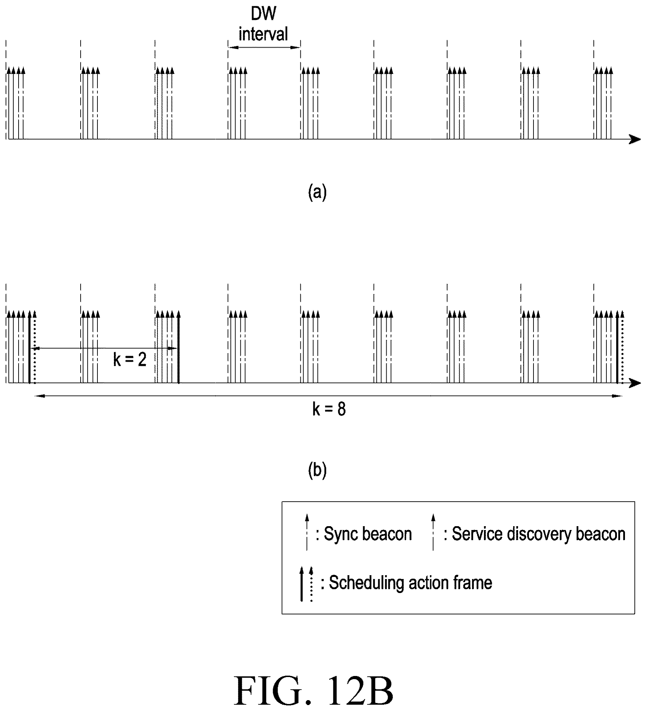

FIGS. 12A and 12B illustrate a method of periodically and repeatedly transmitting scheduling information in a multi-node environment according to an embodiment of the disclosure.

FIGS. 12A and 12B illustrate the second embodiment. In FIG. 12A, a first electronic device (D1) 1210, a second electronic device (D2) 1220, a third electronic device (D3) 1230, and a fourth electronic device (D4) 1240 are connected to each other in the same manner as the first electronic device (D1) 1010, the second electronic device (D2) 1020, the third electronic device (D3) 1030, and the fourth electronic device (D4) 1040 of FIG. 10A, and may operate an AP period and a Wi-Fi Aware period.

In addition, in FIG. 12A, the first electronic device (D1) 1210 and the fourth electronic device (D4) 1240 are non-master non-sync (NMNS) devices of the corresponding cluster, the second electronic device (D2) 1220 is a non-master sync (NMS) device, and the third electronic device (D3) 1230 is a master device, and accordingly, a transmission period of an action frame including scheduling information may vary.

FIG. 12B(a) illustrates a DW interval in which a beacon is transmitted from an electronic device, and FIG. 12B(b) illustrates periodic repeated transmission of an action frame including scheduling information.

In an embodiment, in the case of a non-master sync (NMS) device such as the second electronic device (D2) 1220 or a master device such as the third electronic device (D3) 1230, an action frame including scheduling information may be transmitted by using a reserved field of a discovery beacon or a sync beacon. In an embodiment, in the case of a non-master non-sync (NMNS) device of the corresponding cluster such as the first electronic device (D1) 1210 and the fourth electronic device (D4) 1240, an action frame may be transmitted every k DW intervals.

For example, the first electronic device (D1) 1210 may be configured with k=2, and may transmit an action frame including scheduling information every 2 * DW interval (=16 TU). For example, the fourth electronic device (D4) 1240 may be configured with k=8, and may transmit an action frame including scheduling information every 8 * DW interval (=64 TU). Accordingly, the scheduling information may be repeatedly transmitted by configuring a period value k for transmitting an action frame including scheduling information.

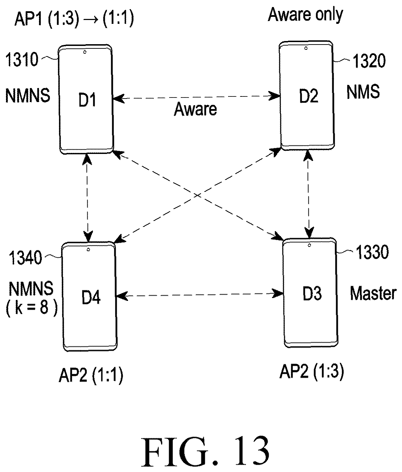

FIG. 13 illustrates a method of transmitting scheduling information, based on a previous scheduling information transmission time point and a packet delivery ratio (PDR), in a multi-node environment according to an embodiment of the disclosure.

FIG. 13 illustrates the third embodiment. In FIG. 13, a first electronic device (D1) 1310, a second electronic device (D2) 1320, a third electronic device (D3) 1330, and a fourth electronic device (D4) 1340 are connected to each other in the same manner as the first electronic device (D1) 1010, the second electronic device (D2) 1020, the third electronic device (D3) 1030, and the fourth electronic device (D4) 1040 of FIG. 10A, and may operate an AP period and a Wi-Fi Aware period.

In addition, in FIG. 13, the first electronic device (D1) 1310 and the fourth electronic device (D4) 1340 are non-master non-sync (NMNS) devices of the corresponding cluster, the second electronic device (D2) 1320 is a non-master sync (NMS) device, and the third electronic device (D3) 1330 is a master device.

Each electronic device may store, for neighbor devices, a device status table including aware scheduling, as shown in Table 1, and may use a predefined aware scheduling index. Each electronic device may request scheduling information according to the device status table. In an embodiment, two different thresholds may be used, which may be related, for example, to a timeout and to a PDR.

First, the case of using a threshold related to a scheduling update timeout will be described. The electronic device may identify the last updated time of the scheduling information of each neighbor device in the cluster. When "the system time of the electronic device - the last updated time of the scheduling information of the neighbor device" is greater than the timeout threshold, the master device may request the neighbor device to update the scheduling information. The neighbor device may transmit the scheduling information. In an embodiment, the update request for the scheduling information may be transmitted to the neighbor device by unicast, and the scheduling information to which the neighboring electronic device responds may be transmitted by broadcast. Accordingly, the scheduling information to which the neighboring electronic device responds may update not only the table of the electronic device that requested it but also the tables stored by other neighbor devices.

For example, referring to Table 1, when the system time of the third electronic device (D3) 1330 is 103,140 and the timeout threshold is 8*DW intervals, for the second electronic device (D2) 1320, "the system time of the master electronic device - the last updated time of the scheduling information of the neighbor device" = 103,140 - 98,020 = 5,120, which is greater than 4,096 (8*512 TU) (threshold). Accordingly, the third electronic device (D3) 1330 may request an update of the scheduling information from the second electronic device (D2) 1320.

Next, a case of using a threshold related to the PDR will be described. Each electronic device may store a device status table including aware scheduling for neighbor devices, as shown in Table 1, and may calculate the PDR for the neighbor devices. When the PDR for a neighbor device is less than or equal to the threshold, the electronic device may request an update of the scheduling information. For example, when the third electronic device (D3) 1330 configures the threshold for the PDR to 0.7, and referring to Table 1 stored by the third electronic device (D3) 1330, the PDR for the first electronic device (D1) 1310 is 0.57, which is less than or equal to the threshold for PDR of 0.7, and therefore, the third electronic device (D3) 1330 may request an update of the scheduling information from the first electronic device (D1) 1310.

Since a low PDR results from poor channel quality, repetitive scheduling update requests may be prevented by configuring a threshold for a PDR and selectively requesting an update of scheduling information.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A first wireless station performing Wi-Fi Aware communication, the first wireless station comprising:

   a transceiver; and
   a controller connected to the transceiver,
   wherein the controller is configured to:

   receive at least one first beacon in a first access point (AP) period in which the first wireless station communicates with a first AP; and
   communicate with a second wireless station in a first aware period in which the first wireless station performs Wi-Fi Aware communication,
   wherein the first AP period and the first aware period are determined based on a maximum AP beacon interval ($i_{max}$), and
   wherein the maximum AP beacon interval ($i_{max}$) is determined by a larger one of a first interval of the first beacon transmitted by the first AP and a second interval of a second beacon transmitted by a second AP connected to the second wireless station.

2. The first wireless station of claim 1, wherein the controller is further configured to, in case of determining the first AP period and the first aware period, determine the first AP period and the first aware period, based on a minimum AP connection loss timeout ($t_{min}$), and

wherein the minimum AP connection loss timeout ($t_{min}$) is determined by a smaller one of a first beacon non-reception time configured to cause an AP connection between the first wireless station and the first AP to be lost, and a second beacon non-reception time configured to cause an AP connection between the second wireless station and the second AP to be lost.

3.   The first wireless station of claim 2, wherein, in case that the maximum number ($\alpha$) of consecutive non-received beacons configured to cause an AP connection to be lost is equal to or greater than the number ($\beta$) of beacons during a discovery window (DW) interval,

the first AP period is determined by the number of slots based on the maximum AP beacon interval ($i_{max}$),
the first aware period is determined by the first AP period and the number of slots based on the DW interval,
the maximum number ($\alpha$) of consecutive non-received beacons configured to cause the AP connection to be lost is determined by the maximum AP beacon interval ($i_{max}$) and the minimum AP connection loss timeout ($t_{min}$), and
the number ($\beta$) of beacons during the DW interval is determined by the maximum AP beacon interval ($i_{max}$) and the DW interval.

4.   The first wireless station of claim 3, wherein, in case that the maximum number ($\alpha$) of consecutive non-received beacons configured to cause the AP connection to be lost is less than the number ($\beta$) of beacons during the DW interval, the first aware period and the first AP period have an identical predetermined length.

5.   The first wireless station of claim 1, wherein, in case that a low-latency mode is required or traffic equal to or greater than a preconfigured value is required for at least one of connections between the first AP and the first station and between the second AP and the second wireless station, the first aware period and the first AP period have an identical predetermined length.

6.   The first wireless station of claim 1, wherein the controller is further configured to:

in case that it is detected in the first AP period that a low-latency mode is required or traffic equal to or greater than a preconfigured value is required for a connection between the first AP and the first wireless station, transmit, in the first aware period, a first action frame indicating a recovery mode to the second wireless station; and
receive, in response to the first action frame, a second action frame indicating an acknowledgement from the second wireless station.

7.   The first wireless station of claim 6, wherein the controller is configured to:

receive a beacon from the first AP in a second AP period following the first aware period; and
communicate with the second wireless station in a second aware period following the second AP period, and
wherein the second AP period and the second aware period have an identical predetermined length.

8.   The first wireless station of claim 3, wherein, in case that, after the first aware period, beacons from the first AP are not completely received until the second AP period corresponding to a margin (m) value, the second AP period is extended beyond the first AP period until a next beacon is received, and
wherein the margin (m) value is determined based on the maximum number ($\alpha$) of consecutive non-received beacons configured to cause the AP connection to be lost and the number ($\beta$) of beacons during the DW interval.

9.   A method of a first wireless station performing Wi-Fi Aware communication, the method comprising:

receiving at least one first beacon in a first access point (AP) period in which the first wireless station communicates with a first AP; and
communicating with a second wireless station in a first aware period in which the first wireless station performs Wi-Fi Aware communication,
wherein the first AP period and the first aware period are determined based on a maximum AP beacon interval ($i_{max}$), and
wherein the maximum AP beacon interval ($i_{max}$) is determined by a larger one of a first interval of the first beacon transmitted by the first AP and a second interval of a second beacon transmitted by a second AP connected to the second wireless station.

10.   The method of claim 9, wherein the determining of the first AP period and the first aware period further comprises determining the first AP period and the first aware period, based on a minimum AP connection loss timeout ($t_{min}$), and wherein the minimum AP connection loss timeout ($t_{min}$) is determined by a smaller one of a first beacon non-reception time configured to cause an AP connection between the first wireless station and the first AP to be lost, and a second beacon non-reception time configured to cause an AP connection between the second wireless station and the second AP to be lost.

11. The method of claim 10, wherein, in case that the maximum number ($\alpha$) of consecutive non-received beacons configured to cause an AP connection to be lost is equal to or greater than the number ($\beta$) of beacons during a discovery window (DW) interval,

the first AP period is determined by the number of slots based on the maximum AP beacon interval ($i_{max}$), the first aware period is determined by the first AP period and the number of slots based on the DW interval, the maximum number ($\alpha$) of consecutive non-received beacons configured to cause the AP connection to be lost is determined by the maximum AP beacon interval ($i_{max}$) and the minimum AP connection loss timeout ($t_{min}$), and the number ($\beta$) of beacons during the DW interval is determined by the maximum AP beacon interval ($i_{max}$) and the DW interval.

12. The method of claim 11, wherein, in case that the maximum number ($\alpha$) of consecutive non-received beacons configured to cause the AP connection to be lost is less than the number ($\beta$) of beacons during the DW interval, the first aware period and the first AP period have an identical predetermined length.

13. The method of claim 9, wherein, in case that a low-latency mode is required or traffic equal to or greater than a preconfigured value is required for at least one of connections between the first AP and the first station and between the second AP and the second wireless station, the first aware period and the first AP period have an identical predetermined length.

14. The method of claim 9, further comprising:

in case that it is detected in the first AP period that a low-latency mode is required or traffic equal to or greater than a preconfigured value is required for a connection between the first AP and the first wireless station, transmitting, in the first aware period, a first action frame indicating a recovery mode to the second wireless station; and receiving, in response to the first action frame, a second action frame indicating an acknowledgement from the second wireless station.

15. The method of claim 14, comprising:

receiving a beacon from the first AP in a second AP period following the first aware period; and communicating with the second wireless station in a second aware period following the second AP period, and wherein the second AP period and the second aware period have an identical predetermined length.

WLAN

150 120

110 Ch. 36 First wireless station

First access point

Ch.6 (149)

115 Ch. 52

Second access point Second wireless station

125

100

# FIG. 1

110,115

120,125

| Access point | | Wireless station |
|---|---|---|

Probe request ← S201

Probe response → S202

Authentication request ← S203

Authentication response → S204

Association request ← S205

Association response → S206

# FIG. 2A

FIG. 2B

FIG. 3

EP 4 708 938 A1

FIG. 4

FIG. 5

EP 4 708 938 A1

FIG. 6

EP 4 708 938 A1

Start

Wi-Fi Aware service initiation — 710

Information exchange
(Wi-Fi connection, beacon interval,
low-latency mode, etc.) — 720

730
Yes    Is AP connection in
low-latency mode?

No

740
Yes    Is excessive AP traffic required?    No

750
Wi-Fi Aware scheduling
in legacy mode

755
Wi-Fi Aware scheduling
based on AP beacon interval

Wi-Fi Aware data communication setup — 760

AP traffic change event occurs — 770

FIG. 7

```
            ┌─────────┐
            │  Start  │
            └────┬────┘
                 │
                 ▼
┌───────────────────────────────────────────┐
│         Receive at least one first beacon,  │
│     in first access point (AP) period in which │── 810
│   communication with first AP is performed  │
└───────────────────┬─────────────────────────┘
                    │
                    ▼
┌───────────────────────────────────────────┐
│      Communicate with second wireless station, │
│           in first aware period in which    │── 820
│      Wi-Fi Aware communication is performed │
└───────────────────┬─────────────────────────┘
                    │
                    ▼
               ┌─────────┐
               │   End   │
               └─────────┘
```

# FIG. 8

```
      901                      903
       │                        │
┌──────────────┐         ┌──────────────┐
│              │◄───────►│  Transceiver │
│              │         └──────────────┘
│              │              905
│  Processor   │               │
│              │         ┌──────────────┐
│              │◄───────►│    Memory    │
└──────────────┘         └──────────────┘
```

# FIG. 9

FIG. 10A

| | Period 1 (128TU) | Period 2 (128TU) | Period 3 (128TU) | Period 4 (128TU) |
|---|---|---|---|---|
| D1 (1:1) | ///// AP1 ///// | | ⇕ AP1 ⇕ | |
| D2 (Aware) | | Wi-Fi Aware | ▮ | |
| D3 (1:3) | AP2 | | ▮ | |
| D4 (1:1) | AP2 | | AP2 | |

# FIG. 10B

DW
interval

1110

D1 scheduling update

(a)

1120

D1 scheduling update with
3 duplicated-frames

(b)

# FIG. 11

FIG. 12A

DW
interval

(a)

k = 2

k = 8

(b)

| ╎ : Sync beacon | ╎ : Service discovery beacon |
| ▮╎ : Scheduling action frame | |

# FIG. 12B

FIG. 13

## INTERNATIONAL SEARCH REPORT

| International application No. |
|---|
| **PCT/KR2024/005610** |

| **A.** | **CLASSIFICATION OF SUBJECT MATTER** |
|---|---|

**H04W 8/00**(2009.01)i; **H04L 5/00**(2006.01)i; **H04W 48/16**(2009.01)i; **H04W 40/24**(2009.01)i; **H04W 76/14**(2018.01)i; **H04W 84/12**(2009.01)i; **H04W 76/20**(2018.01)i; **H04W 56/00**(2009.01)i

According to International Patent Classification (IPC) or to both national classification and IPC

| **B.** | **FIELDS SEARCHED** |
|---|---|

Minimum documentation searched (classification system followed by classification symbols)

H04W 8/00(2009.01); H04L 29/06(2006.01); H04L 29/08(2006.01); H04L 5/00(2006.01); H04W 28/02(2009.01); H04W 48/16(2009.01); H04W 72/04(2009.01); H04W 72/12(2009.01); H04W 76/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AP period, aware period, max AP beacon interval, Wi-Fi aware

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| A | US 2014-0254569 A1 (QUALCOMM INCORPORATED) 11 September 2014 (2014-09-11)<br>See paragraphs [0064]-[0080]; and figures 3-4. | 1-15 |
| A | US 2020-0204656 A1 (SAMSUNG ELECTRONICS CO., LTD.) 25 June 2020 (2020-06-25)<br>See paragraphs [0095]-[0147]; and figures 5-8B. | 1-15 |
| A | US 2022-0078830 A1 (INTEL CORPORATION) 10 March 2022 (2022-03-10)<br>See paragraphs [0031]-[0037]; and figures 3-5B. | 1-15 |
| A | US 2017-0290029 A1 (LG ELECTRONICS INC.) 05 October 2017 (2017-10-05)<br>See paragraphs [0085]-[0094]; and figure 10. | 1-15 |
| A | US 2018-0035449 A1 (APPLE INC.) 01 February 2018 (2018-02-01)<br>See paragraphs [0074]-[0095]; and figures 4-7. | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **29 July 2024** | **30 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/005610**

| Patent document cited in search report | | | Publication date (day/month/year) | Patent family member(s) | | | Publication date (day/month/year) |
|---|---|---|---|---|---|---|---|
| US | 2014-0254569 | A1 | 11 September 2014 | CN | 105122852 | A | 02 December 2015 |
| | | | | EP | 2965550 | A1 | 13 January 2016 |
| | | | | JP | 2016-509454 | A | 24 March 2016 |
| | | | | KR | 10-1837659 | B1 | 12 March 2018 |
| | | | | KR | 10-2015-0128830 | A | 18 November 2015 |
| | | | | US | 9800389 | B2 | 24 October 2017 |
| | | | | WO | 2014-138457 | A1 | 12 September 2014 |
| US | 2020-0204656 | A1 | 25 June 2020 | CN | 113170497 | A | 23 July 2021 |
| | | | | EP | 3861821 | A1 | 11 August 2021 |
| | | | | KR | 10-2020-0079083 | A | 02 July 2020 |
| | | | | US | 11503137 | B2 | 15 November 2022 |
| | | | | WO | 2020-138831 | A1 | 02 July 2020 |
| US | 2022-0078830 | A1 | 10 March 2022 | US | 10383138 | B2 | 13 August 2019 |
| | | | | US | 11259318 | B2 | 22 February 2022 |
| | | | | US | 11723015 | B2 | 08 August 2023 |
| | | | | US | 2017-0026995 | A1 | 26 January 2017 |
| | | | | US | 2020-0163107 | A1 | 21 May 2020 |
| | | | | US | 2021-0410169 | A9 | 30 December 2021 |
| | | | | WO | 2017-014900 | A1 | 26 January 2017 |
| US | 2017-0290029 | A1 | 05 October 2017 | CN | 106688258 | A | 17 May 2017 |
| | | | | CN | 106688258 | B | 08 May 2020 |
| | | | | JP | 2017-530620 | A | 12 October 2017 |
| | | | | KR | 10-1972028 | B1 | 24 April 2019 |
| | | | | KR | 10-2017-0042639 | A | 19 April 2017 |
| | | | | US | 10129900 | B2 | 13 November 2018 |
| | | | | US | 10499408 | B2 | 03 December 2019 |
| | | | | US | 2018-0338317 | A1 | 22 November 2018 |
| | | | | WO | 2016-036140 | A1 | 10 March 2016 |
| US | 2018-0035449 | A1 | 01 February 2018 | US | 11013020 | B2 | 18 May 2021 |

Form PCT/ISA/210 (patent family annex) (July 2022)